# EUROPÄISCHE PATENTANMELDUNG

(11) **EP 0 879 660 A2**
(43) Veröffentlichungstag der Anmeldung: **25.11.1998**
(21) Anmeldenummer: 98108951.9
(22) Anmeldetag: 16.05.1998
(51) Int. Cl.: B21D 43/10

(54) **Presse mit einer Umsetzeinrichtung für Werkstücke**

(30) Priorität: 23.05.1997 DE 19721613
(71) Anmelder: SCHULER PRESSEN GmbH & Co., 73033 Göppingen (DE)
(72) Erfinder: Dangelmayr, Andreas, 73113 Ottenbach (DE); Thudium, Karl, 73116 Wäschenbeuren (DE)

(57) **Zusammenfassung**

Die Presse weist eine Umsetzrichtung auf zum Transfer für Werkstücke durch Bearbeitungsstufen vermittels Greiferschienen (23). Es sind zwei Schlitten (3, 4 bzw. 5, 6) je Greiferschiene vorgesehen, die quer zur Umsetzeinrichtung (28) aufeinander zu und voneinander weg bewegbar sind. An einem Schlitten (4, 5) sind zwei Parallellenker (17, 17', 18, 18') drehbar gelagert, die anderenends drehbar an einem Trägerteil (21) gelagert sind. An dem anderen Schlitten (3, 6) ist eine Lasche (19, 19') drehbar gelagert, die anderenends auf halber Länge an einem Parallellenker (17, 17', 18, 18') angreift. Durch die Bewegung der Schlitten (4) bzw. (5) auf die Schlitten (3) bzw. (6) zu, ist der Trägerteil (21) senkrecht anhebbar.

## Beschreibung

Die Erfindung betrifft eine Presse bzw. Pressenanlage der im Oberbegriff von Anspruch 1 angegebenen Art. Pressen bzw. Pressenanlagen weisen Umformstationen, Bearbeitungsstufen, auf, in denen Bleche zwischen Werkzeughälften vermittels der Bewegung von Stößeln umgeformt werden. Die Bleche, dann Werkstücke, sind den einzelnen Bearbeitungsstufen zuzuführen und diesen nach der Umformung zu entnehmen. Hierzu dient eine Umsetzeinrichtung mit Antriebs- und Führungsmitteln zum Bewegen einer Greiferschiene oder im allgemeinen von zwei Greiferschienen in den Achsen Transfer oder Umsetzbewegung, Heben- und Senk-Bewegung und bei 3 Achs-Systemen auch in der Bewegung Öffnen und Schließen.

Die Übertragung der Bewegungen Heben/Senken und Öffnen/Schließen erfolgt in sogenannten Schließkästen, die gewissermaßen als Bodengeräte bzw. als pressenseitige Einrichtungen im Bereich der Pressenständer angeordnet sind, in jedem Fall aber die Abstützung der Greiferschienen in voneinander fernen Bereichen bewerkstelligen müssen.

Einerseits eröffnet der Einsatz von Direkt-Antriebsmitteln, z.B. Elektromotoren, neue Möglichkeiten, andererseits sind mechanische Mittel zum Übertragen von Bewegungen und zum Führen bewegter Teile unverzichtbar.

In der JP 59-197325 (A) ist eine Transfereinrichtung gezeigt mit motoriellen Antrieben für den Transfer und die Öffnen-Schließen-Bewegung. Das Heben bzw. Senken der Greiferschienen würde gesonderte Maßnahmen bzw. Mittel erfordern.

Die US-PS 3,010,587 zeigt eine Einrichtung zum Beladen von Pressen mit einer Zusatzeinrichtung für eine senkrechte Bewegung. Hierbei ist gemäß dem Wirkprinzip ein Schlitten horizontal auf einen Festpunkt zu und von diesem weg beweglich. An dem Schlitten ist eine Lasche drehbeweglich, die in ihrem Mittenbereich von einer in dem Festpunkt drehbeweglichen weiteren Lasche gehalten ist. Die Länge von Drehlager in dem Festpunkt bis zur Lagerung im Mittenpunkt dieses Hebels entspricht der halben Länge der an dem Schlitten gelagerten Lasche. Zur Vermeidung des Kippens des an dieser Lasche angelenkten Tisches bedarf es eines zweiten, gleich aufgebauten Laschensystems.

In der EP 0 760 272 A1 ist weiterhin eine Positioniereinrichtung beschrieben mit zwei in Führungen aufeinander zu und voneinander weg beweglichen Schlitten. Die Schlitten sind vermittels motoriell drehgetriebener Spindeln beweglich und tragen ein Parallellenkerpaar zum horizontalen Abstützen eines Tisches. Der zweite Schlitten trägt einen Lenker bzw. eine Lasche, die gleichfalls an dem Tisch angelenkt ist. Die Lenker bzw. Laschen sind an den Schlitten und am Tisch drehbeweglich gelagert. Um eine exakt senkrecht geführte Bewegung des Tisches ausführen zu können, bedarf es einer absoluten Steuerung der die Spindeln drehtreibenden Motoren in reversibler Drehung.

Demgegenüber ist es eine Aufgabe der Erfindung, eine Greiferschiene bzw. wenn vorhanden, zwei Greiferschienen in den vielzahligen Möglichkeiten der Grundeinstellungen einzustellen und aus diesen heraus zu bewegen, wobei eine genau definierbare Senkrechtbewegung erzielbar ist.

Eine solche Aufgabe wird mit einer Umsetzeinrichtung gattungsgemäßer Art bei einer Presse gelöst durch die den Anspruch 1 kennzeichnenden Merkmale. Hierbei von Vorteil ist die Nutzung des oberen Trägerteils als direktes Lager für die Greiferschiene oder als indirektes Teil bei Verwendung von zusäzlichen Lager- bzw. Führungsmitteln für die Greiferschiene. Gegenüber bekannten Schließkasten-Lösungen war die konstruktive Maßnahme der Lagerung von Spindeln in Längserstreckung der Schließkästen durchzuführen.

Die Merkmale nach Anspruch 2 bewirken den Vorteil gemeinsamer Antriebsmittel, wobei für Anspruch 1 offen ist, ob nicht generell ein Antrieb je Spindel für die beiden Schlitten einer Greiferschiene vorzusehen ist.

Ansprüche 3 und 4 gehen ein auf ein neu verwendbares Antriebskonzept der Nutzung des Linear-Motor- Prinzips. Zwar ist aus der DE 195 06 079 A1 das Prinzip in Anwendung für die Bewegungsachsen von Greiferzangen an Greiferschienen bekannt. Die Nutzung dieses Prinzips zum Heben und Senken eines Führungselementes für Greiferschienen vermittels Laschenlenker ist dieser Schrift nicht entnehmbar.

Anhand von in den Skizzen dargestellten Ausführungsbeispielen soll im folgenden die Erfindung erläutert werden.

Es zeigen:
- Fig. 1: einen Schließkasten einer Presse mit Einrichtungen nach der Erfindung,
- Fig. 2: den in Fig. 1 gezeigten Schließkasten in Perspektive.
- Fig. 3: eine Draufsicht auf den in Fig. 1 gezeigten Schließkasten,
- Fig. 4: eine Draufsicht auf einen Schließkasten einer weiteren, hinsichtlich der Antriebsmittel geänderten Ausführung,
- Fig. 5: eine Draufsicht auf Antriebsmittel nach den Fign. 1, 2 und 3, gemäß Schnitt II-II in Fig. 3,
- Fig. 6: eine Draufsicht auf Antriebsmittel gemäß Schnitt III-III in Fig. 4,
- Fig. 7: einen Schließkasten mit Einrichtungen nach der Erfindung in weiterer Antriebsausgestaltung und
- Fig. 8: einen Schnitt gemäß dem Schnittverlauf I-I in Fig. 7.

Pressen bzw. Pressenanlagen weisen eine Anzahl an Schließkästen auf als Teile der Umsetzeinrichtungen für den Blechteile- bzw. Werkstücktransport durch die Presse.

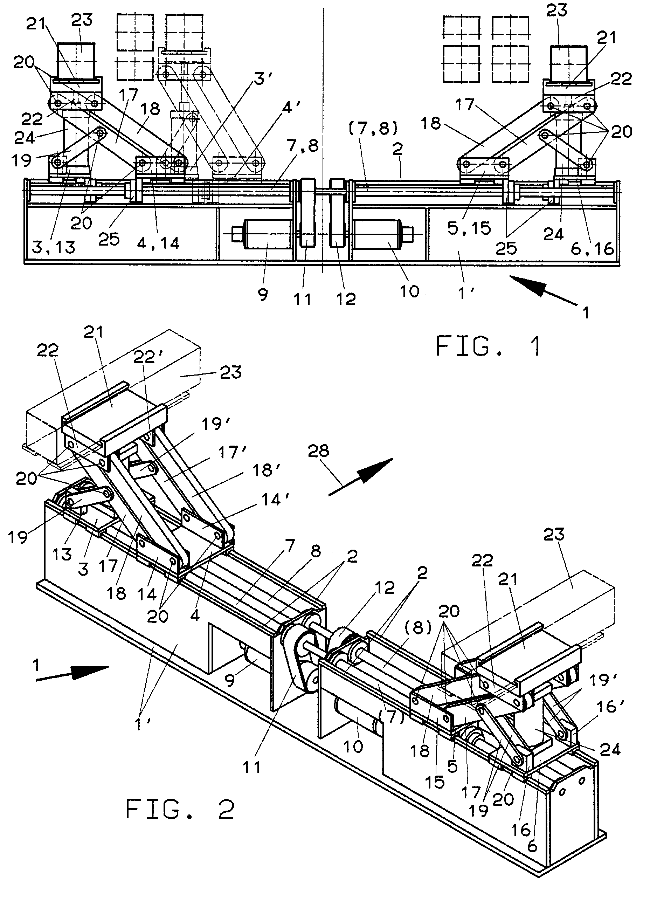

Die Schließkästen 1 in den Figuren weisen eine Konsole 1' auf, die grundsätzlich eine Schweißkonstruktion sein kann aus zusammengefügten Blechen, Trägern, Stegblechen und Gurten. Es sind Führungen 2 vorgesehen, die sich über die Gesamtlänge der Konsole 1' oder über Teilbereiche dieser, wie in Fign. 1 und 2 gezeigt, erstrecken, wobei die Gesamtlänge der Konsole 1' sich aus der Breite der Presse ergibt. In den Führungen 2 sind Schlitten einer ersten Art 4, 5 und Schlitten einer zweiten Art 3, 6, verschiebbar gelagert. Die Schlitten 3, 4 sind einer Greiferschiene 23 zugeordnet; die Schlitten 5, 6 sind einer zweiten Greiferschiene 23 zugeordnet. Die Greiferschienen 23 tragen in bekannter Weise Haltemittel für die Blechteile und sind in Transportrichtung der Werkstücke, Pfeil 28 in Fig. 2, soweit erforderlich aufeinander zu und voneinander weg in Schließ-/Öffnen-Bewegung und in vertikaler Richtung zum Heben und Senken zu bewegen.

In den Schließkästen 1 bzw. der Konsole 1' der Figuren 1 bis 6 sind Spindeln 7, 8 drehbeweglich gelagert, die sich parallel zu der Längserstreckung von Konsole 1' und deren Führungen 2 erstrecken. Die Spindeln 7, 8 in den Figuren 1, 2, 3 und 5 weisen rechts- linksgängige Gewindegänge auf und sind über jeweils einen Zahnriementrieb 11 bzw. 12 von konsolenfesten Motoren 9 bzw. 10 drehgetrieben. Die Schlitten 3, 4, 5, 6 sind vermittels Spindelmuttern 25 an den Spindeln angeschlossen.

Zum Gewichtsausgleich der Greiferschienen 23 weisen die Schlitten 3 bzw. 6 je einen Druckzylinder 24 auf. Der Schlitten 3 ist mit einem Lagerbock 13 versehen, in dem eine Lasche bzw. Doppellasche 19 bzw. ein Laschenpaar bzw. ein Doppellaschenpaar 19, 19' schwenkbeweglich gelagert ist.

Eine gleiche Ausführung weist der Schlitten 6 auf mit den in dem Lagerbock 16 bzw. den Lagerböcken 16, 16' gelagerten Laschen 19, 19'.

Der Schlitten 4 weist Lagerböcke 14 und 14' auf, in denen Parallellenker 17, 18 und 17' 18' schwenkbeweglich gelagert sind.

Eine gleiche Ausführung zeigt der Schlitten 5 mit den in den Lagerböcken 15 und 15', letzterer ist nicht erkennbar, gelagerten Parallellenkern 17, 18, 17', 18'. Die Laschen 19 bzw. Laschenpaare 19, 19' an den Schlitten 3 bzw. 6 sind mit dem den Schlitten abgewandten Endbereich an jeweils einen der Parallellenker 17, 18, 17', 18' und zwar auf deren halber wirksamer Gesamtlänge angelenkt. Die Parallellenker 17, 17' 18, 18' sind mit den schlittenfernen Endbereichen an Lagerböcken 22, 22' eines Trägerteils 21 angelenkt. Dieser Trägerteil dient direkt als Führungsmittel oder bei Verwendung zusätzlicher Ausrüstung, wie gesonderter Lagerung, der Aufnahme bzw. dem Abstützen der Greiferschiene 23 bzw. eines Teilstückes dieser bei geteilter Greiferschiene. Die Drehpunkte der Laschen und Parallellenker sind allgemein mit 20 positioniert.

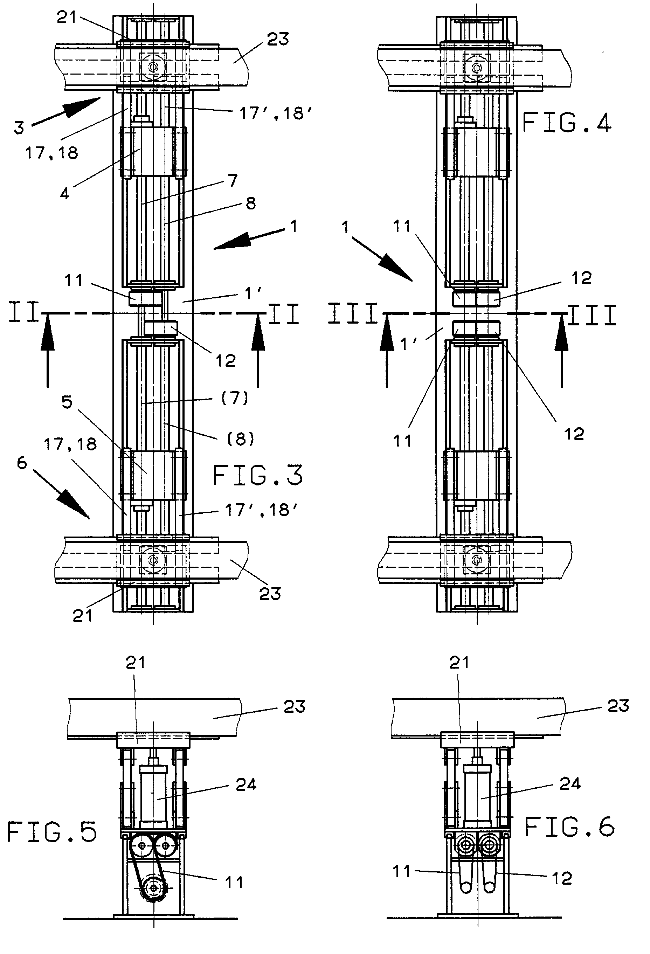

Während sich die Spindeln 7, 8, in dem Ausführungsbeispiel nach den Figuren 1, 2, 3 und 5, über die Gesamtlänge der Konsole 1' erstrecken, sind die Spindeln 7, 8 in den Figuren 4 und 5 unterteilt. Einerseits sind hierzu weitere Zahnriementriebe 11, 12 erforderlich, andererseits sind dadurch jedoch die einer Greiferschiene 23 zugeordneten Schlitten 3, 4 unabhängig von den Schlitten 5, 6 der anderen Greiferschiene 23 verstellbar, um so unterschiedliche Grundweiten der Greiferschienen 23 als auch unterschiedliche Höhen dieser zu bewirken.

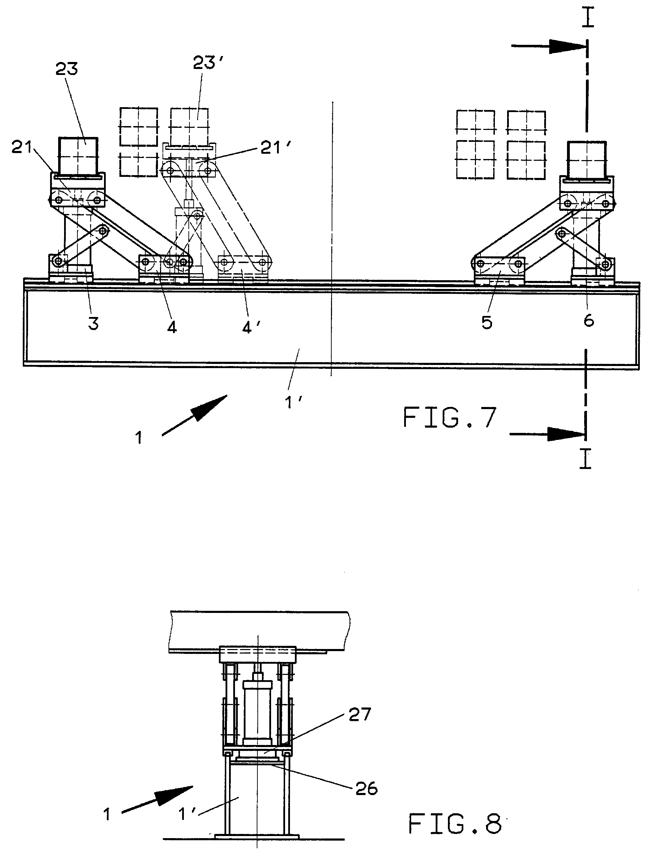

In den Figuren 7 und 8 ist die Anwendung des bekannten Linear-Motor-Prinzips gezeigt. Der Sekundärteil wird gebildet durch Aufbauten 26 in der Konsole 1'; der Primärteil wird gebildet durch Aufbauten 27 in den jeweiligen Schlitten 3, 4, 5, 6 der Figur 7. Die Anwendung des Linear-Motor-Prinzips für den Transfer von Werkstücken ist aus der US-A-4,887,446, als auch in der DE 195 06 079 beschrieben worden. Hier wirkt das Prinzip direkt auf das Werkstück oder auf die dieses erfassende Haltemittel.

Die Verstellung der Schlitten 3 und 4 und der Schlitten 5 und 6 über den Zahnriementrieb 11, 12 auf die Spindeln 7, 8 aufeinander zu bzw. voneinander weg bewirkt ein Anheben bzw. Absenken der auf den Trägern 21 geführten und abgestützten Greiferschiene 23. Hierbei ist die Hebe-Senkbewegung eine absolut senkrechte Bewegung, wenn nur die Schlitten 4 bzw. 5 bewegt werden, die Schlitten 3 bzw. 6 gehalten sind.
Desweiteren ist die Bewegung der Greiferschienen 23 aufeinander zu und voneinander weg durch gemeinsame Verstellung der Schlitten 3, 4 bzw. 5, 6 erreichbar.

## Patentansprüche

1. Presse, Mehrstufenpresse, Großteilstufenpresse o.dgl. Pressenanlage, mit einer Umsetzeinrichtung für Werkstücke durch die Bearbeitungsstufen, mit Antriebsmitteln und Führungsmitteln für eine Greiferschiene (23) bzw. für jede von zwei Greiferschienen (23) in den Bewegungsachsen Umsetzen, Heben-/Senken und ggf. Öffnen-/Schließen, **gekennzeichnet durch** zwei Schlitten (3, 4, 5, 6) einer ersten und einer zweiten Art, die einer Greiferschiene (23) bzw. je einer Greiferschiene (23) bei Verwendung von zwei Greiferschienen (23) zugeordnet sind und die Schlitten (3, 4, 5, 6) aufeinander zu und voneinander weg, quer zur eigentlichen Umsetzrichtung (28) der Werkstücke unabhängig voneinander antreibbar sind, daß an einem Schlitten der ersten Art (4, 5) zwei Parallellenker (17, 17', 18, 18') drehbar gelagert sind, die anderenends drehbar an einem Trägerteil (21) für eine Greiferschiene (23) gelagert sind und an dem anderen Schlitten (3, 6) der zweiten Art eine Lasche (19, 19') drehbar gelagert ist, die anderenends auf halber Länge an einem der Parallellenker (17, 17', 18, 18') angreift und hier drehbar gelagert ist, wobei die Länge der Lasche (19, 19') der halben Länge des Parallellenkers (17, 17') entspricht, bezogen auf die Abstände deren Drehpunkte (20), und wobei das Trägerteil (21) direkt als Längsführung für eine Greiferschiene (23), bei Verwendung separater Führungsmittel indirekt der Lagerung der Geiferschiene (23) dient.

2. Presse nach Anspruch 1, **dadurch gekennzeichnet,** daß zwei Trägerteile (21) für die Aufnahme je einer Greiferschiene (23) je Schließkasten (1) vorhanden sind und die Schlitten (3, 4, 5, 6) von gemeinsamen, über im wesentlichen die Länge der Öffnen-Schließen-Bewegung ausführenden Schlitten (3, 4, 5, 6) geführten, motoriell getriebenen Spindeln (7, 8) beaufschlagbar sind.

3. Presse nach Anspruch 1, **dadurch gekennzeichnet,** daß die Schlitten (3, 4, 5, 6) nach dem Linear-Motor-Prinzip angetrieben sind.

4. Presse nach Anspruch 3, **gekennzeichnet durch** ein sich im wesentlichen über die Länge der Öffnen-Schließen-Bewegung erstreckenden Sekundärteil (26) und in die Schlitten (3, 4, 5, 6) integrierte Primärteile.
